(19) Europäisches Patentamt
European Patent Office
Office européen des brevets

(11) EP 0 751 015 B1

(12) **FASCICULE DE BREVET EUROPEEN**

(45) Date de publication et mention de la délivrance du brevet:
**28.11.2001 Bulletin 2001/48**

(51) Int Cl.[7]: **B60C 15/00**, C21D 9/52, B60C 9/00

(21) Numéro de dépôt: **96109461.2**

(22) Date de dépôt: **13.06.1996**

(54) **Pneumatique comportant des câbles circonférentiels pour ancrer la carcasse, procédé de préparation de tels câbles**

Reifen mit in Umfangrichtung verlaufenden Korden zur Verankerung der Karkasse, Verfahren zur Herstellung solcher Korden

Tyre comprising circumferential cords for the anchoring of the carcass, method of preparation of such cords

(84) Etats contractants désignés:
**BE CH DE ES FR GB IT LI LU NL PT SE**

(30) Priorité: **29.06.1995 FR 9507977**

(43) Date de publication de la demande:
**02.01.1997 Bulletin 1997/01**

(60) Demande divisionnaire:
**01106876.4 / 1 123 820**

(73) Titulaire: **SEDEPRO**
**F-75015 Paris (FR)**

(72) Inventeurs:
- **Arnaud, Jean-Claude**
  **63830 Durtol (FR)**
- **Pereira, Pedro Costa**
  **63000 Clermont-Ferrand (FR)**

(74) Mandataire: **Bauvir, Jacques**
**Michelin & Cie,**
**Service SGD/LG/PI Ladoux**
**63040 Clermont-Ferrand Cedex 01 (FR)**

(56) Documents cités:

| | |
|---|---|
| **EP-A- 0 582 196** | **EP-A- 0 611 669** |
| **FR-A- 2 077 770** | **FR-A- 2 152 078** |
| **FR-A- 2 615 453** | **US-A- 4 407 683** |

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 751 015 B1

## Description

La présente invention se rapporte aux pneumatiques. Plus particulièrement, elle concerne la conception des bourrelets de ceux-ci.

On connaît le rôle des bourrelets des pneumatiques : il s'agit d'assurer "l'accrochage" du pneumatique sur la jante sur laquelle il est monté. A cette fin, les câbles de carcasse rejoignent tous la partie basse du bourrelet, où ils sont fermement ancrés, afin que la carcasse résiste aux efforts de tension en service.

Tout récemment, un nouveau type de bourrelet a été proposé dans la demande de brevet EP 0582196, correspondant au préambule de la revendication 1. Ce bourrelet est dépourvu de l'habituel retournement de la carcasse autour d'une tringle. Au lieu de cela, à l'endroit de l'ancrage, les éléments renforçants de carcasse sont disposés en un ou plusieurs alignements. En imaginant la disposition de l'ensemble de ces éléments dans l'espace, ceux-ci dessinent approximativement, à l'intérieur de chaque alignement, un tronc de cône partiel d'axe confondu avec l'axe de rotation du pneumatique. Les éléments renforçants de carcasse sont bordés latéralement par au moins une pile d'éléments renforçants circonférentiels, réalisée par exemple par bobinage en spirale. En outre, un mélange de caoutchouc de liaison approprié assure la transmission des efforts entre ces éléments renforçants orientés perpendiculairement les uns par rapport aux autres.

Les essais du déposant ont montré qu'une telle structure de bourrelet résiste parfaitement aux sollicitations rencontrées en utilisation, même sévère, et ceci aussi bien pour des pneumatiques pour véhicules de tourisme que pour d'autres applications. En dehors des sollicitations dues à l'utilisation proprement dite du pneumatique, celui ci doit en outre être capable de subir un nombre indéterminé de démontages suivis de remontages pour en poursuivre l'utilisation.

On sait que, lorsque le pneumatique est monté sur une roue, plus le serrage du bourrelet est important, plus faible sera la tendance du pneumatique à déjanter. Pour rappel, le serrage est l'effort de compression de la gomme située dans la partie radialement la plus basse du bourrelet, développant une pression sur la surface radialement extérieure du siège de la jante correspondante. Un certain niveau de serrage est nécessaire pour pouvoir transmettre un couple freineur ou moteur entre la jante et le pneumatique. Le serrage dépend non seulement des caractéristiques propres du pneumatique (géométrie du bourrelet, rigidité des matériaux qui y sont employés) mais aussi de la géométrie de la jante elle-même.

Mais on sait aussi que plus le serrage est important, plus grandes seror t les difficultés pour monter et/ou démonter le pneu. Le démontage notamment implique l'appliquer un effort assez important (fonction du serrage sur la jante) sur le bourrelet au niveau du crochet de la jante, ou juste au dessus de celui-ci. Cet effort est orienté parallèlement à l'axe de rotation et est toujours appliqué localement par un poussoir ou un levier. Ces outils appliquent une déformation sur le bourrelet du pneumatique. Cette déformation peut être très importante. C'est la première phase du démontage dont le but est de décoincer le bourrelet, c'est à dire de lui faire quitter son siège en l'éloignant du rebord de jante. Pendant cette première phase, le bourrelet du pneumatique est soumis à des efforts d'extension localisés, mais très importants.

Ensuite, on utilise en général des leviers pour contraindre le bourrelet à franchir le rebord de jante. En effet, dans le cas des jantes en une seule pièce (cas de loin le plus courant pour les pneumatiques pour véhicules de tourisme et pour camionnettes), la forme de la jante est conçue pour permettre le montage et le démontage grâce à une oval sation du bourrelet, sans augmentation du périmètre de celui-ci. Cela conditionne notamment le dessin du creux central de montage et des rebords bordant latéralement la jante et définissant la position de montage du bourrelet. Pendant cette seconde phase, le bourrelet subit une déformation d'ensemble qui est bien moins pénalisante que les sollicitations survenant pendant la première phase.

Le concepteur du pneumatique cherche à atteindre un bon compromis entre la sécurité (faible sensibilité au déjantage) obtenue en agissant notamment sur le serrage, et la facilité de montage/démontage. Le respect de ces impératifs (sollicitations de service et sollicitations au montage et démontage) quelque peu contradictoires et la volonté de simplifier la fabrication et de limiter le poids de matière sont des objectifs de la présente invention.

Plus précisément, un objectif de l'invention est d'améliorer l'aptitude de la structure de bourrelet décrite dans le brevet EP 0582196 précité à subir des démontages même réalisés dans des conditions peu soigneuses, notamment avec des outils déréglés. Dans ce cas, au cours de la première phase du démontage, la pointe du bourrelet, retenue par un hump, subit une rotation centrée sensiblement sur ladite pointe (voir figure 3) parce que ce type de bourrelet est assez souple en rotation dans un plan radial. Si cette rotation va jusqu'à un basculement du bourrelet, comme représenté à la figure 3, une partie des spires de câble circonférentiel 2 subit un allongement très important. Cet allongement peut atteindre environ 3 % pour les spires 40 les plus basses de la pile 4 axialement extérieure. Dans les cas extrêmes, si cet allongement se combine avec une déformation locale due à la pression de l'outil de démontage, le démontage peut causer la rupture du câble dans une ou plusieurs spires.

En particulier, la présente invention vise à permettre un très grand nombre de démontages avec réutilisation possible du pneumatique, sans sacrifier les performances du pneumatique en usage.

Selon l'invention, le pneumatique comporte des flancs se terminant par des bourrelets, ceux-ci étant conçus pour être montés sur une jante, ledit pneumatique comportant une armature de carcasse passant dans les flancs et rejoignant les bourrelets, l'un au moins desdits bourrelets comprenant :

- des éléments renforçants de carcasse allant de la partie radialement basse du bourrelet vers le flanc,
- au moins une pile de câbles circonférentiels bordant latéralement les éléments renforçants de carcasse, lesdits câbles circonférentiels ayant un taux d'allongement fonctionnel $A_f = A_e + A_p$ supérieur à 4%,
- un mélange de caoutchouc de liaison disposé entre les câbles circonférentiels et les éléments renforçants de carcasse.

La figure 4 montre un diagramme de contrainte en fonction de l'alongement. On note d'abord un allongement $A_e$, spécifique de l'effet câble. Cet allongement traduit un resserrement des fils du câble, avant même de solliciter lesdits fils en traction. Sur le diagramme, on note ensuite un allongement plastique $A_p$ et enfin un allongement élastique $A_e$.

Pour la description de l'invention, nous introduisons ici la notion de taux d'allongement fonctionnel $A_f = A_e + A_p$. Ce taux d'allongement fonctionnel ne comprend pas l'allongement spécifique $A_s$ de l'effet "câble".

Quant à la contrainte maximale, elle est déterminée par la formule suivante :

$$R_m = \frac{F_m \rho}{{}^M/_L}$$

où $F_m$ est la force maximale, p est la masse volumique de la matière considérée (7.8 gr/cm$^3$ pour l'acier utilisé), et M/L est la masse linéique du câble utilisé.

De préférence, la contrainte maximale $R_m$ est supérieure à 2000 MPa, et même avantageusement supérieure à 2200 MPa, ce qui permet de construire un bourrelet aussi léger que possible, la légèreté étant en soi un facteur de performance et contribuant à limiter le coût du pneumatique.

L'invention sera parfaitement comprise grâce à la consultation de la description suivante, illustrant à l'aide des figures jointes et de façon non limitative, un exemple de réalisation concret d'un bourrelet de pneumatique.

Les figures 1 et 2 sont des coupes radiales de deux variantes d'un bourrelet de pneumatique selon l'invention.
La figure 3 illustre la rotation du bourrelet lors du démontage d'un pneumatique.
La figure 4 illustre les différents allongements caractérisant un câble.
La figure 5 illustre les caractéristiques d'éléments de renforcement utilisés dans les bourrelets de pneumatique.
Les figures 6 et 7 illustrent des variantes de réalisation de l'invention.
La figure 8 illustre une autre variante, sollicitée en rotation lors du démontage d'un pneumatique.

Aux figures 1 et 2, on voit un bourrelet dans lequel on aperçoit des élement renforçants 1 de carcasse et des câbles circonférentiels 2.

Dans le présent mémoire, on réservera le terme "fil" au mono-filament résultant d'une opération de filage ou de tréfilage ou de laminage ou une opération équivalente. Un câble est un assemblage de plusieurs fils fins. Dans le cas de fils d'acier, il s'agit de fils de diamètre compris environ entre 0.05 mm et 0.8 mm. Le présent mémoire n'aborde pas les différentes méthodes de réalisation d'un tel assemblage, qui sont nombreuses et bien connues de l'homme du métier. Le terme "câble" renvoie indistinctement à tous les types d'assemblage de fils (par exemple des torons, des retors ou câbles proprement dits).

Lorsque l'on parle d'un "élément renforçant", on vise alors de façon générique aussi bien des câbles que des mono-filaments, quelle que soit l'allure dudit élément, pourvu qu'elle soit filiforme, et quelle que soit la matière de celui-ci. Par exemple, un cablé en rayonne ou en aramide rentre dans cette définition générique.

Les éléments renforçants 1 de carcasse sont indifféremment constitués par des câbles, métalliques ou non métalliques ou des mono-filaments. L'ancrage des éléments renforçants 1 de carcasse est assuré par des câbles circonférentiels 2, avec interposition d'une composition de caoutchouc de liaison 3. De préférence, ladite composition est le mélange "MS" dont la formulation est donnée ci-dessous, au point 6 après le premier tableau. Le câble circonférentiel 2 est disposé en plusieurs tours formant une ou plusieurs spirales. Le lecteur pourra trouver plus de détails concernant ce type de bourrelet dans la demande de brevet EP 0582196 précitée. Ces câbles 2 sont eux-mêmes constitués de l'assemblage de plusieurs fils 21, bien visibles aux agrandissements dessinés aux figures 1 et 2, à intérieur de cercles reportés à droite du bourrelet.

Pour fixer les idées, on peut utiliser un câble (2+7)0.28 non fretté. Ce câble est constitué d'une âme composée de 2 fils retordus, entourée par une couche de 7 fils également retordus ensemble en sens contraire. Cependant, le modèle précis d'assemblage n'a pas d'incidence particulière pour mettre en oeuvre l'invention. En revanche, les essais du déposant l'ont conduit à observer qu'il n'était pas indifférent d'utiliser n'importe quel câble d'acier.

La figure 5 donne un diagramme de contrainte en fonction de l'allongement pour un câble classique (courbe C), pour un câble selon l'invention (courbe I) et pour du fil tringle d'un type classique (courbe T). Au titre d'illustration générale, on peut citer le brevet US 5010938 qui illustre un schéma de bobinage du genre classiquement utilisé pour constituer une tringle. Celle-ci est réalisée par bobinage de plusieurs spires jointives d'un fil tringle. On appelle "fil tringle" un fil d'acier de diamètre assez important, de l'ordre de 0.8 mm, ou plus encore. Ce fil tringle est souvent du fil à grand allongement et présente une contrainte maximale $R_m$ valant environ 2000 MPa (Méga Pascal - voir courbe T de la figure 5). L'allongement fonctionnel, correspondant ici à l'allongement total $A_t$, est élevé, de l'ordre de 6%.

La courbe C illustre la caractéristique, après vulcanisation en pneu, d'un câble en acier couramment utilisé en nappes de sommet. On peut noter un allongement fonctionnel $A_f$ valant environ 2%, ainsi qu'un faible allongement $A_S$ spécifique de l'effet "câble", donc de l'architecture du câble utilisé. La rupture intervient à un niveau de contrainte $R_m$ élevé, pouvant atteindre 3000 MPa

L'invention vise à obtenir une grande résistance aux démontages successifs, tout en conservant l'avantage de la structure de bourrelet décrite dans le brevet EP 0582196 précité. En outre, l'invention se propose d'obtenir cette résistance aux démontages tout en utilisant des matériaux à contrainte maximale élevée, ce qui limite la quantité de matière à utiliser et allège d'autant le pneu. De par l'utilisation de câbles, un autre avantage de l'invention est la plus grande facilité de fabrication du pneu car les câbles sont moins difficiles à mettre en oeuvre (parce que plus souples) que des fils de diamètre plus grand comme des fils tringles.

L'invention propose d'utiliser un câble 2 bien particulier pour réaliser les piles 4 d'éléments renforçants. Ce câble jouit à la fois d'une contrainte maximale assez élevée, au moins aussi élevée que celle dont jouissent les tringles classiques, et d'un grand allongement, allongement bien plus grand que celui présenté par les câbles classiques.

On va maintenant décrire comment un tel câble peut être obtenu par un traitement thermique particulier.

L'influence du traitement thermique sur la variation de l'allongement fonctionnel $A_f$ est fonction de la composition chimique et du taux d'écrouissage du fil d'acier, de la durée et de la température du traitement thermique. Afin d'obtenir un supplément très significatif de l'allongement fonctionnel $A_f$, il est préférable que le taux d'écrouissage $\varepsilon$ du fil utilisé reste inférieur à une valeur comprise entre 3.5 et 4, la valeur limite précise dépendant de la composition chimique du fil d'acier. Le taux $\varepsilon$ est défini par a relation suivante: $\varepsilon = \ln(S_0/S_f)$ où $S_o$ est la surface de la section du fil avant écrouissage et $S_f$ la surface de la section du fil après écrouissage.

On sait que les renforts en acier pour les pneus possèdent une résistance élevée à la traction, et possèdent un bon pouvoir d'adhésion à la gomme. La résistance est obtenue lors de la mise en forme du fil d'acier par un procédé connu par l'homme de métier, par exemple par tréfilage. Cette opération, menée sur du fil fin, nécessite un coulant de tréfilage. Dans les applications aux pneus, ce coulant de tréfilage est généralement formé par un revêtement adhérisant classique, le plus souvent en laiton, déposé sur le fil d'acier pour favoriser l'adhésion du caoutchouc sur ledit fil d'acier. En variante, le revêtement adhérisant pourrait être constitué par un alliage à base de Cu, de Zn et de Ni, ou encore tout revêtement favorisant l'adhésion au caoutchouc tout en jouant le rôle de coulant de tréfilage. Plusieurs fils peuvent ensuite être assemblés de manière à former un câble. On obtient ainsi un renfort constitué de fil d'acier écroui et couvert d'un revêtement adhérisant. Ces renforts sont caractérisés par une faible ductilité de l'assemblage ou/et des fils constitutifs (voir courbe C à la figure 5).

Un traitement thermique réalisé postérieurement à l'écrouissage pour augmenter la ductilité est connu en soi. L'opération de revêtement (par exemple un laitonnage) intervient généralement après ledit traitement thermique, pour ne pas dégrader le revêtement.

Par exemple, le brevet FR 2152078 décrit un moyen permettant d'améliorer la ductilité, par une modification de structure. Il y est décrit comment on peut obtenir un matériau ayant une structure martensitique revenue. Dans ce brevet FR 2152078, on dépasse un niveau de température de l'ordre de 800°C. Le revêtement en laiton ne peut être déposé qu'après ce type de traitement thermique car sinon, aux températures atteintes, le revêtement de laiton serait détruit et ce renfort serait inutilisable en pneumatique car non adhérent au caoutchouc. Par la suite, ce brevet décrit un traitement thermique de revenu, qui est appliqué à une structure substantiellement martensitique, et trempée. De plus, puisque le revenu s'effectue en bain de plomb, une opération de nettoyage s'impose alors, ce qui serait très problématique si l'on cherchait à appliquer ce procédé à des assemblages comme des câbles et non pas à un monofilament (fil unitaire) car le nettoyage est une opération très délicate à effectuer sur des câbles torsadés. Enfin, le revêtement classique en laiton ne peut pas être déposé avant le revenu, car le matériau est insuffisamment ductile. Si on le dépose sur le câble après le revenu, il est très difficile d'assurer l'homogénéité du revêtement en laiton. On voit donc que ce brevet n'apporte pas de solution satisfaisante pour préserver l'adhérence du câble au caoutchouc.

Dans le cadre de la présente invention, il est proposé différents procédés de préparation qui se sont révélés être particulièrement avantageux. Ces procédés, intéressants en soi, sont en outre préférentiellement appliqués à des câbles dont le fil d'acier comporte une teneur en carbone comprise entre 0.7% et 0.9%.

Il s'agit d'un traitement thermique par effet Joule (désigné ci après par EJ) à une température comprise entre 400°C et 500°C, pendant une durée inférieure ou égale à 5 secondes. Les temps donnés sont les temps de chauffage ; ils ne comprennent pas le temps de refroidissement. On peut aussi citer le traitement thermique par convection statique

(désigné ci après par CV), la convection étant de préférence réalisée sous atmosphère protectrice et à une température inférieure à 420°C, et dans ce cas refroidissement qui s'en suit est lui aussi mené sous atmosphère protectrice. On peut encore citer le traitement thermique par induction (désigné ci après par IN), la température étant comprise entre 400°C et 550°C et le temps de chauffage étant inférieur ou égale à 1 seconde.

On peut également réaliser le traitement thermique par EJ ou par IN sous atmosphère protectrice, pour limiter autant que possible la dégradation du revêtement (par exemple l'oxydation du laiton). Dans ce cas, il est préférable de maintenir le câble sous atmosphère protectrice pendant le refroidissement. En variante ou en supplément à l'utilisation d'une atmosphère protectrice, on peut pour tous ces traitements thermiques prévoir une opération de décapage, suivie comme connu par un rinçage à l'eau et un séchage

La présente invention s'étend ainsi à un traitement thermique qui présente en combinaison les caractéristiques suivantes. C'est un traitement de recuit de restauration, réalisé à basse température. On entend par cela une température qui soit en tout cas inférieure à $Ac_1$ (température correspondant à une transformation de la structure cristalline de l'acier) et de préférence inférieure ou égale à 550°C, tout en étant généralement supérieure à 250°C. C'est aussi un traitement réalisé directement sur câble comportant des fils couverts séparément par un revêtement adhérisant.

La limite de température dépend en réalité du temps et du mode de chauffage. Il semble que l'énergie apportée au câble doive être sensiblement identique pour tous les traitements thermiques. Les températures données sont des températures atteintes en surface du câble. Elles peuvent être mesurées par exemple par thermovision, ou par jauge de contact lorsque c'est possible. Elles sont relevées pendant le traitement thermique lui-même, ou juste après lorsqu'il est en pratique difficile de faire autrement. C'est ici le cas des valeurs données pour le traitement thermique IN.

Le traitement thermique porte la capacité d'allongement fonctionnel $A_f$ du câble à une valeur supérieure à environ 4%, tout en maintenant la résistance à la traction à un niveau suffisant pour le pneumatique (contrainte maximale $R_m$ valant environ au moins 2000 MPa après traitement thermique) ainsi qu'en maintenant une aptitude à adhérer au caoutchouc suffisante. La courbe I à la figure 5 décrit une caractéristique typique d'un tel câble. On a bien précisé qu'il s'agit d'un supplément de capacité d'allongement fonctionnel car les valeurs données ne comprennent pas l'allongement $A_s$ spécifique de l'effet "câble", Or le supplément de capacité d'allongement fonctionnel ne dépend pas de l'architecture du câble, à matériau identique, mais dépend essentiellement du traitement thermique.

Le fil utilisé est plus généralement en acier écroui à teneur élevée en carbone (comprise entre 0.4% et 1.0% C), et comprenant éventuellement les éléments classiques tels que du manganèse et du silicium pour augmenter certaines propriétés spécifiquement requises comme cela est connu par les hommes de métier, et comprenant en outre des impuretés en quantité mineure. La mise en forme, jusqu'au diamètre final peut être effectuée par un procédé quelconque, par exemple par tréfilage. Les fils sont assemblés entre eux de manière à former un câble, par un procédé convenable d'assemblage (retordage ou câblage proprement dit).

Le câble traité est constitué de fils élémentaires écrouis et revêtus. Le raiternent thermique sur câble (c'est à dire après assemblage) permet de traiter simultanément tous les fils en une seule opération.

Dans les exemples suivants, on décrit les procédés utilisés et les résultats obtenus. On utilise partout du fil d'acier essenfellement perlitique, écroui et laitonné, constituant un câble non fretté. Sa composition chimique précise, donnée relativement au pcids de l'acier, est la suivante : teneur en carbone : 0.81%, en manganèse : 0.54%, en silicium : 0.25%, en phosphore : 0.01%, en soufre : 0.01%, en chrome : 0.11%, en nickel : 0.03%, en cuivre : 0.01%, en aluminium : 0.005%, en azote : 0.003%.

<u>Exemple 1:</u> Traitement par effet joule (EJ) sur un câble (2+7)0.28 :

Le principe consiste à chauffer le câble en continu pendant son défilement, par effet Joule sous atmosphère protectrice (par exemple un mélange d'azote et d'hydrogène).

La durée de chauffage est d'environ 2.7 secondes. La température de traitement est de 450°C. Après le chauffage, le câble est refroidi sous atmosphère protectrice (N2,H2) puis enroulé sur des bobines. Il présente les caractéristiques suivantes :

| (2+7)0.28 | $R_m$ (MPa) | $\Delta$ $R_m$ (%) | $A_f$ (%) | adh test | $\Delta$ adh (%) test | adh MS | $\Delta$ adh (%) MS |
|---|---|---|---|---|---|---|---|
| avant TTBT | 2920 | | 2.8 | 78 | | 90 | |
| EJ / N2,H2 | 2497 | -14 | 5.0 | 56 | -28 | 93 | +3 |

où, dans cet exemple comme dans les suivants :

1. TTBT signifie "traitement thermique à basse température" ;
2. les valeurs d'adhésion (adh) donnent une appréciation de la qualité d la liaison entre le câble et une composition

de caoutchouc formant un bloc dans lequel ledit câble est noyé, l'ensemble étant vulcanisé tout en laissant une partie du câble déborder hors dudit bloc pour constituer ainsi une éprouvette de test ; les valeurs données correspondent à la mesure de la force nécessaire pour extraire le câble hors du caoutchouc ;
3. toutes les variations (Δ) sont indiquées en pourcentage ; pour permettre le classement des différentes solutions par une lecture comparative ;
4. l'aptitude intrinsèque du câble à adhérer sur du caoutchouc est contrôlée expérimentalement sur ladite éprouvette en observant l'effort à partir duquel se séparent le câble et la matrice ;
5. les colonnes "test" correspondent à une matrice en mélange dit de test comportant 100% de NR (caoutchouc naturel), avec addition de charges renforçantes pour obtenir une dureté Shore A convenable, supérieure à 70, un taux de soufre important, compris entre 5% et 8%, et un taux de cobalt élevé, compris entre 0.3% et 0.4% (les pourcentages étant donnés en référence au poids total d'élastomère) ; quant à son aptitude à adhérer au câble, ce mélange est très sensible aux variations chimiques du revêtement en laiton sur le câble ;
6. les colonnes "MS" correspondent au mélange préférentiel décrit ci-dessous par référence au brevet EP 0582196. Pour rappel, ledit mélange comporte un élastomère synthétique SBR utilisé seul ou en coupage avec du polybutadiène (PB), ledit SBR ayant une température de transition vitreuse (Tg) comprise entre -70°C et -30°C et ledit PB ayant une Tg comprise entre -40°C et -10°C, le ou lesdits élastomères synthétiques étant utilisés en proportion totalisée d'au moins 40 % du poids total d'é astornère, le solde étant constitué par du caoutchouc naturel. Les Tg considérées sont mesurées par analyse thermique différentielle. De préférence, on utilise un mélange contenant 50 % de SBR solution ayant une Tg valant -48°C, 50 % de NR, avec addition de charges renforçantes et de résine pour obtenir la dureté Shore A convenable, supérieure à 70. De préférence, pour obtenir un bon collage du mélange sur un fil laitonné, on utilise un taux de soufre important, compris entre 5% et 8% du poids total d'élastomères, et on utilise du cobalt en quantité de l'ordre de 0.2% du poids total d'élastomères.

<u>Exemple 2 :</u> Traitement par convection (CV) sur un câble (2+7)0.28, suivi d'un décapage (DECA).

Le câble est traité dans un four à convection statique (four de recuit de restauration) sous atmosphère protectrice contrôlée, par exemple azote hydrogéné à 6% d'hydrogène. On le chauffe jusqu'à 350°C en 3 heures 30. On effectue ensuite un maintien à la même température pendant 30 minutes. Puis on le refroidit jusqu'à température ambiante en 3 heures. Les bobines sont ensuite dérou ées pour permettre le passage du câble dans un bain d'acide orthophosphorique ou sulfurique à très faible concentration (environ 4%). Le temps de séjour dans ce bain ce décapage est de l'ordre de 2 secondes. Le bain est à la température ambiante. Les caractéristiques obtenues sont les suivantes :

| (2+7)0.28 | $R_m$ (MPa) | Δ $R_m$ (%) | $A_f$ (%) | adh test | Δ adh (%) test | adh MS | Δ adh (%) MS |
|---|---|---|---|---|---|---|---|
| avant TTBT | 2920 | | 2.8 | 78 | | 90 | |
| CV + DECA | 2443 | -16 | 5.4 | 67 | -14 | 85 | -6 |

<u>Exemple 3 :</u> Traitemer.t par induction (IN) sur un câble (2+7)0.28

Le câble est chauffé au défilé par induction, sous atmosphère protectrice (NH3 craqué ou N2,H2). Le recuit de restauration se fait par induction électromagnétique en faisant circuler des courants induits sur une longueur de l'ordre de 40 cm, la vitesse de traitement peut être variable (80 m/min par exemple), l'ensemb e étant réglé pour obtenir un traitement thermique homogène du câble. La température relevée en surface du câble et en sortie de l'inducteur est de l'ordre de 450 °C. Les caractéristiques obtenues sont les suivantes :

| (2+7)0.28 | $R_m$ (MPa) | Δ $R_m$ (%) | $A_f$ (%) | adh test | Δ adh (%) test | adh MS | Δ adh (%) MS |
|---|---|---|---|---|---|---|---|
| avant TTBT | 2920 | | 2.8 | 78 | | 90 | |
| IN / N2,H2 | 2524 | -14 | 5.4 | 39 | -50 | 86 | -4 |

<u>Exemple 4 :</u> Traitement par effet joule (EJ) sur un câble (3+8)0.35, sous atmosphère protectrice.

| (3+8)0.35 | $R_m$ (MPa) | Δ $R_m$ (%) | $A_f$ (%) | adh test | Δ adh (%) test | adh MS | Δ adh (%) MS |
|---|---|---|---|---|---|---|---|
| avant TTBT | 2537 | | 3.09 | 90 | | 85 | |

(suite)

| (3+8)0.35 | $R_m$ (MPa) | Δ $R_m$ (%) | $A_f$ (%) | adh test | Δ adh (%) test | adh MS | Δ adh (%) MS |
|---|---|---|---|---|---|---|---|
| EJ / N2,H2 | 2410 | -5 | 5.31 | 68 | -24 | 101 | +19 |

L'analyse de ces exemples permet de noter que la valeur absolue de l'adhésion du caoutchouc sur le câble dépend aussi de la formule de mélange de caoutchouc utilisée. On peut ainsi accepter une plus ou moins grande altération du revêtement adhérisant due au traitement thermique, selon la formulation du mélange que l'on utilise pour le caoutchouc de liaison 3.

Si l'on emploie le mélange MS précité, on peut accepter une déchéance plus grande (de l'ordre de 70% sur le mélange "test") car les performances en adhésion obtenues avec ce mélange sont moins sensibles à une modification de la nature chimique du revêtement lors du traitement thermique à basse température. Mais de préférence, on ne retiendra que les solutions qui présentent sur le mélange test une déchéance inférieure à 50%. Dans tous les exemples ci-dessus et en particulier dans l'exemple 3, on peut noter que le mélange MS offre la meilleure aptitude à contenir la déchéance à un niveau faible dans les cas les plus défavorables. Cependant, d'autres types de mélanges pourraient être formulés et cette dernière remarque n'est pas limitative. D'autres conditions de réalisation des traitements thermiques pourraient être utilisées ; il est possible que dans certains cas, on aboutisse à une déchéance moindre de l'adhésion, ce qui rendrait possible l'utilisation dudit mélange "test" pour la couche 3, ou bien encore l'utilisation d'un autre mélange éventuellement moins favorable à l'adhésion que le mélange MS.

En conclusion, l'invention propose un procédé de préparation d'un cible pour pneu, dans lequel, partant d'un câble réalisé en fil d'acier écroui et couvert d'un evêtement adhérisant favorisant l'adhésion entre l'acier et le caoutchouc, on soumet ledit câble à un traitement thermique de recuit de restauration, à une température comprise entre 250°C et $Ac_1$, pendant une durée présélectionnée de façon à porter le taux d'allongement fonctionnel $A_f$ à une valeur supérieure à 4%, mettant en oeuvre des moyens tels que, e contrôlant l'aptitude d'un tel câble à adhérer à un mélange de caoutchouc dit de "test" avant et après ladite préparation, la déchéance observée est inférieure ou égale à 70%.

Lesdits moyens peuvent être un décapage du câble d'acier postérieurement au TTBT, ou le choix d'une atmosphère suffisamment protectrice pendant le TTBT et le refroidissement qui le suit, ou tout autre moyen d'effet équivalent.

Grâce à l'invention, on conserve une bonne adhésion entre caoutchouc et métal. De plus, en cas de sollicitations importantes au démontage, le câble 2 dépasse la limite élastique mais reste toujours sous la limite de rupture. Le câble conserve donc une zone de comportement élastique même là où un effort localisé l'a porté au delà de sa limite élastique initiale. Même s'il subsiste un allongement résiduel important (de l'ordre de 2 à 3%) dais la zone sollicitée par un démontage, cet allongement rapporté sur le périmètre total d'un spire de câble 2 ne représente qu'une valeur de l'ordre de 1 pour 1000, ce qui ne perturbe en rien la bonne tenue du pneu sur la jante après un nouveau montage.

La valeur d'usage du pneu ainsi réalisé n'est en rien altérée par les quelques cycles de démontage et montage qu'un pneu subit au cours de son service, et ceci d'autant plus que même s'il se produit un allongement dépassant la limite élastique lors de chaque démontage, non seulement cet allongement ne concerne qu'une toute petite longueur du câble, comme on l'a vu, mais en outre un tel allongement ne survient que sur une petite partie des spires superposées, et préférentiellement pour la pile axialement extérieure du bourrelet.

On a proposé ci-dessus l'utilisation d'un câble bien particulier, à grand a longement, comme renfort circonférentiel assurant l'ancrage des éléments renforçants de carcasse. On propose ci-dessous de respecter des règles géométriques de construction pour l'architecture du bourrelet. Ces règles peuvent être utilisées en combinaison avec le type de câble défini ci-dessus, ou bien indépendamment de ce type de câble. Ces règles de construction peuvent donc être utilisées quel que soit l'élément renforçant circonférentiel utilisé, même si l'on remplace le câble 2 par des câbles textiles ou par des renforts mono-filamentaires, quelle que soit la nature et la géométrie de ceux-ci. Notons que, de préférence, l'élément renforçant circonférentiel doit jouir d'une aptitude à l'allongement assez grande. Si l'on emploie un fil tringle (mono-filament métallique), c'est un fil à grand allongement (voir par exemple la courbe T à la figure 5).

Lorsque par exemple le dimensionnement du bourrelet et/ou les choix de matériaux rendent le bourrelet relativement peu compact, il est avantageux de décaler radialement vers le haut le bas de pile 5 axialement la plus à l'extérieur, comme illustré aux figures 6 et 7. Ainsi, lorsqu'il y a au moins deux piles d'éléments renforçants circonférentiels 2 bordant latéralement les éléments renforçants de carcasse, il y a un décalage radial entre la partie radialement la plus basse de ladite pile 5 et des piles 4 voisines. Cela contribue aussi à limiter la sollicitation des câbles lors du démontage du pneu. De préférence, la partie radialement la plus basse de chaque pile est décalée radialement vers le haut par rapport à la partie radialement la plus basse de la pile adjacente du côté axialement intérieur.

Dans le même esprit, la spire la plus basse de chaque pile 41, 42, 43 (voir figure 8) est située à un niveau radial tel que, lors d'un basculement du bourrelet, elle n'est pas contrainte à grandir en diamètre plus que d'une valeur

limitant l'allongement du câble à un niveau qu'il peut supporter sans dommage. Autrement dit, la surtension des spires les plus sollicitées reste faible. Notons que l'augmentation du périmètre des spires concernées n'est pas proportionnelle à ce qui peut apparaître comme une augmentation de diamètre à la figure 8. En effet, on a expliqué ci-dessus que la déformation ne concerne par de façon homogène tout le pourtour de la spire en question. La sollicitation provoquant le basculement du bourrelet est une sollicitation locale. Notons aussi que, au moment où le bourrelet s'appuie sur la pointe (position centrale aux figures 8 et 3), la pointe se déforme, notamment sous l'effet de contraintes de cisaillement agissant à ce moment sur une épaisseur relativement faible, ce qui limite l'extension que subissent les différentes spires.

Sous un autre aspect, on peut tenir plus exactement compte de la géométrie du bourrelet, voire des duretés différentes des produits que l'on peut rencontrer. Aux figures 6 et 7, on a visualisé les distances totales $e_1$ et $e_2$, $e_1$ étant la distance dans la direction radiale séparant la spire la plus basse de la surface du bourrelet devant venir en contact avec le siège de la jante (ou de son prolongement le cas échéant) et $e_2$ étant la distance dans la direction axiale séparant la spire la plus basse de la surface du bourrelet du côté de la cavité interne du pneumatique, c'est à dire en rejoignant le côté axialement intérieur. Pour que la spire considérée ne subisse pas une surtension préjudiciable, il convient en première approximation (c'est à dire en supposant que la dureté des différents produits croisés le long des segments marqués $e_1$ et $e_2$ aux figures 6 et 7) que $e_2$ soit plus petit ou égal à $e_1$. En tenant compte plus précisément de la nature exacte des différents constituants, et en considérant que $e_{1j}$ est l'épaisseur de chaque produit qui sépare radialement la spire radialement la plus basse d'une pile quelconque de la face radialement inférieure du bourrelet, et que $e_{2i}$ est l'épaisseur de chaque produit qui sépare radialement la spire radialement la plus basse d'une pile quelconque de la face axialement intérieure du bourrelet, et que $G_{1j}$ et $G_{2i}$ sont les modules de Young respectifs des produits considérés, alors le critère de conception peut s'exprimer comme suit :

$$\sum_i e_{2i} * G_{2i} \leq \sum_j e_{1j} * G_{1j}$$

Il est ainsi proposé une architecture dans laquelle chaque spire des piles 4 ou 5 voit son niveau de tension diminuer lors du basculement du bourrelet, ce qui conduit à diminuer le niveau de serrage et à faciliter le démontage. Les règles proposées sont expérimentales. Le résultat recherché est que, pendant que le bourrelet bascule, il ne subissent pas d'extension préjudiciable. Dès que le bourrelet a quitté son siège, il se détend, même du côté axialement intérieur de la roue, là où le siège est souvent prolongé par une zone en générale cylindrique assez large (creux de jante décalé axialement vers l'extérieur). Ainsi, l'essentiel est que, au cours du basculement, chaque spire ne soit pas contrainte de passer à une position radiale supérieure à sa position de référence dans le bourrelet non sollicité en rotation (voir figure 8).

## Revendications

1. Pneumatique comportant des flancs se terminant par des bourrelets ceux-ci étant conçus pour être montés sur une jante, ledit pneumatique comportant une armature de carcasse (1) passant dans les flancs et rejoignant les bourrelets, l'un au moins desdits bourrelets comprenant :

   - des éléments renforçants ce carcasse allant de la partie radialement basse du bourrelet vers le flanc,
   - un mélange de caoutchouc de liaison (3) disposé entre les câbles circonférentiels et les éléments renforçants de carcasse,

   **caractérisé en ce qu'**il y a

   - au moins une pile (4) de câbles circonférentiels (2) bordant laté alement les éléments renforçants de carcasse, lesdits câbles circonférentiels ayant un taux d'allongement fonctionnel $A_f$ supérieur à 4%.

2. Pneumatique selon la revendication 1, dans lequel le câble circonférentiel (2) est constitué par des fils unitaires laitonnés d'acier écroui (21).

3. Pneumatique selon l'une des revendications 1 à 2, dans lequel le câble circonférentiel (2) est disposé en plusieurs tours formant une ou des spirales.

4. Pneumatique selon l'une des revendications 1 à 3, dans lequel ledit mélange de caoutchouc de liaison (3) comporte

un élastomère synthétique SBR utilisé seul ou en coupage avec du polybutadiène (PB), ledit SBR ayant une température de transition vitreuse (Tg) comprise entre -70°C et -30°C et ledit PB ayant une Tg comprise entre -40°C et -10°C, le ou lesdits élastomères synthétiques étant utilisés en proportion totalisée d'au moins 40 % du poids total d'élastomère, le solde étant constitué par du caoutchouc naturel, ledit mélange comportant un taux de soufre compris entre 5% et 8% du poids total d'élastomères, et du cobalt en quantité de 0.2% du poids total d'élasto mères.

**5.** Pneumatique selon l'une des revendications 1 à 4, dans lequel lesdits câbles ont une contrainte maximale $R_m$ supérieure à 2000 MPa.

**6.** Procédé de préparation d'un câble pour pneu, dans lequel, partant d un câble réalisé en fil d'acier écroui dont la teneur en carbone est comprise entre 0.4% et 1.0%, couvert d'un revêtement adhérisant favorisant l'adhésion entre l'acier et le caoutchouc, on soumet ledit câble à un traitement thermique de recuit de restauration, à une temperature comprise entre 250°C et $Ac_1$, pendant une durée présélectionnée de façon à porter le taux d'allongement fonctionnel $A_f$ à une valeur supérieure à 4%, et en mettant en oeuvre des moyens de limitation de la déchéance de l'aptitude d'un tel câble à adhérer à un mélange de caoutchouc.

**7.** Procédé selon la revendication 6, utilisant un acier dont la teneur en carbone est comprise entre 0.7% et 0.9%, dans lequel ledit traitement thermique est réalisé par effet Joule pendant une durée inférieure ou égale à 5 secondes, à une température comprise entre 400°C et 500°C.

**8.** Procédé selon la revendication 6, utilisant un acier dont la teneur en carbone est comprise entre 0.7% et 0.9%, dans lequel ledit traitement thermique est réalisé par convection statique sous atmosphère protectrice, à une température inférieure à 420°C, et est suivi d'un refroidissement sous atmosphère protectrice.

**9.** Procédé selon la revendication 6, utilisant un acier dont la teneur en carbone est comprise entre 0.7% et 0.9%, dans lequel ledit traitement thermique est réalisé par induction à une température comprise entre 400°C et 550°C, pendant une durée inférieure ou égale à 1 seconde.

**10.** Procédé selon la revendication 7 ou 9, dans lequel le traitement therrnique est réalisé sous atmosphère protectrice, de même que le refroidissement qui le suit.

**11.** Procédé selon l'une des revendications 7 à 10, suivi d'une étape de décapage.

**12.** Procédé selon l'une des revendications 7 à 11, mettant en oeuvre des moyens tels que, en contrôlant l'aptitude d'un tel câble à adhérer à un mélange de caoutchouc dit de "test" avant et après ladite préparation, la déchéance observée est inférieure ou égale à 60%.

**13.** Procéde selon la revendication 12, dans lequel le mélange dit de test comporte une matrice en, comportant 100% de NR (caoutchouc naturel), avec addition de charges renforçantes pour obtenir une dureté Shore A supérieure à 70, un taux de soufre compris entre 5% et 8%, et un taux de cobalt compris entre 0.3% et 0.4% (les pourcentages étant donnés en référence au poids total d'élastomère).

**14.** Procédé selon l'une des revendications 7 à 11, mettant en oeuvre des moyens tels que, en contrôlant l'aptitude d'un tel câble à adhérer à un mélange de caoutchouc dit de "test" avant et après ladite préparation, la déchéance observée est inférieure ou égale à une valeur de seuil, ledit mélange de test étant plus sensible aux variations dans le revêtement du câble que ledit mélange de caoutchouc de liaison et ledit mélange de test étant formulé de sorte que ladite valeur de seuil soit plus grande que la déchéance observée avec ledit caoutchouc de liaison.

**15.** Câble d'acier "à grand allongement" utilisable pour le renforcement de pneumatiques, constitué de fils d'acier au carbone écroui, couverts d'un revêtement adhérisant favorisant l'adhésion entre l'acier et le caoutchouc, le diamètre des fils étant compris entre 0,05 et 0,8 mm et la teneur en carbone de l'acier étant comprise entre 0,4% et 1%, **caractérisé en ce qu'**il vérifie, avant et après cuisson en pneumatique, la relation suivante:

$$Af = Ae + Ap > 4\%,$$

Af étant son allongement dit "fonctionnel", somme de son allongement élastique Ae et de son allongement plastique

Ap.

**16.** Câble selon la revendication 15, **caractérisé en ce qu'**il vérifie la relation : Rm > 2000 MPa, Rm étant sa résistance maximale à la traction.

**17.** Câble selon les revendications 15 ou 16, la teneur en carbone de l'acier étant comprise entre 0,7% et 0,9%.

**18.** Câble selon l'une quelconque des revendications 15 à 17, le revêtement étant en laiton.

**19.** Câble selon l'une quelconque des revendications 15 à 18, ses fils ayant un taux d'écrouissage $\varepsilon$ inférieur à 3,5.

**20.** Câble selon l'une quelconque des revendications 15 à 19, consistant en un câble à couches de construction (2+7) ou (3+8) formé d'une première couche de deux ou trois fils tordus ensemble, entourée d'une seconde couche de 7 ou 8 fils enroulés ensemble en hélice autour de cette première couche.

**21.** Câble selon l'une quelconque des revendications 15 à 20, vérifiant la. relation Rm > 2200 MPa.

**22.** Pneumatique comportant des flancs se terminant par des bourrelets, ceux-ci étant conçus pour être montés sur une jante, ledit pneumatique comportant une armature de carcasse (1) passant dans les flancs et rejoignant les bourrelets, l'un au moins desdits bourrelets comprenant :

- des éléments renforçants de carcasse allant de la partie radialement basse du bourrelet vers le flanc,
- au moins deux piles d'éléments renforçants circonférentiels (2) bordant latéralement les éléments renforçants de carcasse,

**caractérisé en ce que** la partie radialement la plus basse de la pile ax alement la plus à l'extérieur (5) est décalée radialement vers le haut par rapport à la partie radialement la plus basse de la pile (4) adjacente, et **en ce que** lesdits câbles circonférentiels (2) ont un taux d'allongement fonctionnel $A_f$ supérieur à 4 %.

**23.** Pneumatique selon la revendication 22, dans lequel la partie radialement la plus basse de chaque pile étant décalée radialement vers le haut par rapport à la partie radialement la plus basse de la pile adjacente du côté axialement intérieur.

**24.** Pneumatique comportant des flancs se terminant par des bourrelets, ceux-ci étant conçus pour être montés sur une jante, ledit pneumatique comportant une armature de carcasse (1) passant dans les flancs et rejoignant les bourrelets, l'un au moins desdits bourrelets comprenant :

- des éléments renforçants de carcasse allant de la partie radialement tasse du bourrelet vers le flanc,
- au moins deux piles d'éléments renforçants circonférentiels (2) bordant latéralement les éléments renforçants de carcasse,
- des matériaux tels que $e_{1j}$ est l'épaisseur de chaque produit qui sépare radialement la spire radialement la plus basse d'une pile quelconque de la face radialement inférieure du bourrelet, et que $e_{2i}$ est l'épaisseur de chaque produit qui sépare radialement la spire radialement la plus basse d'une pile quelconque de la face axialement intérieure du bourrelet, et que $G_{1j}$ et $G_{2i}$ sont les modules de Young respectifs des produits considérés, lesdits matériaux respectant la règle suivante :

$$\sum_i e_{2i} * G_{2i} \leq \sum_j e_{1j} * G_{1j}$$

**caractérisé en ce que**
lesdits câbles circonférentiels (2) ont un taux d'allongement fonctionnel $A_f$ supérieur à 4 %.

## Claims

**1.** A tyre comprising sidewalls which terminate in beads, the beads being designed to be mounted on a rim, said tyre comprising a carcass reinforcement (1) which passes into the sidewalls and joins the beads, one at least of said

beads comprising:

- carcass-reinforcing elements which extend from the radially bottom part of the bead towards the sidewall,
- a connecting rubber mix (3) arranged between the circumferential cables and the carcass-reinforcing elements,

**characterised in that** there is

- at least one stack (4) of circumferential cables (2) laterally bordering the carcass-reinforcing elements, said circumferential cables having an operational elongation rate $A_f$ of more than 4%.

**2.** A tyre according to Claim 1, in which the circumferential cable (2) is formed by brass-coated unit wires of work-hardened steel (21).

**3.** A tyre according to one of Claims 1 or 2, in which the circumferential cable (2) is arranged in several turns forming one or more helices.

**4.** A tyre according to one of Claims 1 to 3, in which said connecting rubber mix (3) comprises an SBR synthetic elastomer used by itself or blended with polybutadiene (PB), said SBR having a glass transition temperature (Tg) of between -70°C and -30°C and said PB having a Tg of between -40°C and -10°C, said synthetic elastomer or elastomers being used in a total proportion of at least 40% of the total weight of elastomer, the balance being formed by natural rubber, said mix having a sulphur concentration of between 5% and 8% of the total weight of elastomers and a cobalt concentration in an amount of 0.2% of the total weight of elastomers.

**5.** A tyre according to one of Claims 1 to 4, in which said cables have a maximum stress $R_m$ greater than 2000 MPa.

**6.** A method of preparing a tyre cable in which, starting from a cable of work-hardened steel wire, the carbon content of which is between 0.4% and 1.0%, covered with an adherent coating promoting adhesion between the steel and the rubber, said cable is subjected to a recovery annealing heat treatm ant at a temperature between 250°C and $Ac_1$ for a period of time preselected in such a manner as to bring the operational elongation rate $A_f$ to a value of more than 4%, and using means for limiting the decrease in the ability of such a cable to adhere to a rubber mix.

**7.** A method according to Claim 6, using a steel the carbon content of which is between 0.7% and 0.9%, in which said heat treatment is effected by Joule effect for a period of less than or equal to 5 seconds at a temperature between 400°C and 500°C.

**8.** A method according to Claim 6, using a steel the carbon content of which is between 0.7% and 0.9%, in which said heat treatment is effected by static convection within a protective atmosphere at a temperature below 420°C and is followed by cooling under a protective atmosphere.

**9.** A method according to Claim 6, using a steel the carbon content of which is between 0.7% and 0.9%, in which said heat treatment is effected by induction at a temperature between 400°C and 550°C for a period of time less than or equal to 1 second.

**10.** A method according to Claim 7 or 9, in which the heat treatment is effected in a protective atmosphere, as is the cooling which follows it.

**11.** A method according to one of Claims 7 to 10, followed by a pickling step.

**12.** A method according to one of Claims 7 to 11, using means such that, by controlling the ability of such a cable to adhere to a so-called "test" rubber mix before and after said preparation, the decrease observed is less than or equal to 60%.

**13.** A method according to Claim 12, in which the so-called test mixture comprises a matrix, comprising 100% NR (natural rubber), with the addition of reinforcing fillers to obtain a Shore A hardness of more than 70, a content of sulphur of between 5% and 8%, and a content of cobalt of between 0.3% and 0.4% (the percentages being given with reference to the total weight of elastomer).

**14.** A method according to one of Claims 7 to 11, using means such that, by controlling the ability of such a cable to adhere to a so-called "test" rubber mix before and after said preparation, the decrease observed is less than or equal to a threshold value, said test mix being more sensitive to variations in the coating of the cable than said connecting rubber mix and said test mix being formulated such that said threshold value is greater than the decrease observed with said connecting rubber.

**15.** A steel cable "of high elongation" which can be used for reinforcing tyres, formed of work-hardened carbon steel wires, covered with an adherent coating which promotes adhesion between the steel and the rubber, the diameter of the wires being between 0.05 and 0.8 mm and the carbon content of the steel being between 0.4% and 1%, **characterised in that**, before and after curing in the tyre, it satisfies the following relationship:

$$Af = Ae + Ap > 4\%,$$

Af being the so-called "functional" elongation thereof, the total of the elastic elongation Ae and of the plastic elongation Ap thereof.

**16.** A cable according to Claim 15, **characterised in that** it satisfies the relationship: Rm > 2000 MPa, Rm being its maximum tensile strength.

**17.** A cable according to Claims 15 or 16, the carbon content of the steel being between 0.7% and 0.9%.

**18.** A cable according to any one of Claims 15 to 17, the coatirg being of brass.

**19.** A cable according to any one of Claims 15 to 18, the wires thereof having a work-hardening ratio $\varepsilon$ of less than 3.5.

**20.** A cable according to any one of Claims 15 to 19, consisting of a layered cable of structure (2+7) or (3+8) formed of a first layer of two or three wires twisted together, surrounded by a second layer of 7 or 8 wires wound together in a helix around this first layer.

**21.** A cable according to any one of Claims 15 to 20, which salisfies the relationship Rm > 2200 MPa.

**22.** A tyre having sidewalls terminating in beads, the beads be ng designed to be mounted on a rim, said tyre having a carcass reinforcement (1) which passes into the sidewalls and joins the beads, one at least of said beads comprising:

- carcass-reinforcing elements extending from the radially bottom part of the bead towards the sidewall,
- at least two stacks of circumferential reinforcing elements (2) laterally bordering the carcass-reinforcing elements,

**characterised in that** the radially lowermost part of the stack axially farthest to the outside (5) is shifted radially upward with respect to the radially lowermost part of the adjacent stack (4), and **in that** said circumferential cables (2) have an operational elongation rate $A_f$ of more than 4%.

**23.** A tyre according to Claim 22, in which the radially lowermost portion of each stack is shifted radially upward with respect to the radially lowermost portion of the adjacent stack on the axially inner side.

**24.** A tyre comprising sidewalls terminating in beads, the beads being designed to be mounted on a rim, said tyre having a carcass reinforcement (1) passing into the sidewalls and joining the beads, at least one of said beads comprising:

- carcass-reinforcing elements extending from the radially bottom part of the bead towards the sidewall,
- at least two stacks of circumferential reinforcing elements (2) laterally bordering the carcass-reinforcing elements,
- materials such that $e_{1j}$ is the thickness of each product which radially separates the radially lowermost helix of any stack from the radially lower face of the bead, and that $e_{2i}$ is the thickness of each product which radially separates the radially lowermost helix of any stack from the axially inner face of the bead and that $G_{1j}$ and $G_{2i}$ are the respective Young's moduli of the products in question, said materials satisfying the following relation-

ship:

$$\sum_i e_{2i} * G_{2i} \leq \sum_j e_{1j} * G_{1j}$$

**characterised in that** said circumferential cables (2) have an operational elongation rate $A_f$ of more than 4%.

**Patentansprüche**

1. Reifen mit Flanken, die in Wülsten enden, die ihrerseits so ausgebildet sind, daß sie auf einer Felge montiert werden können, wobei der Reifen eine Karkassenbewehrung (1) aufweist, die die Flanken durchläuft die Wülsten miteinander verbindet, wobei mindestens einer der Wülste die folgenden Merkmale aufweist:

   - verstärkende Karkassenelemente, die vom radial unteren Teil des Wulstes zur Flanke hin verlaufen, und
   - eine Verbindungs-Gummimischung (3), die zwischen den Umfangsseilen und den die Karkasse verstärkenden Elementen angeordnet ist,

   **dadurch gekennzeichnet, daß**

   - mindestens ein Stapel (4) von Seilen bzw. Korden (2) vorliegt, die in Umfangsrichtung verlaufen und an die verstärkenden Karkassenelemente angrenzen, wobei die genannten Umfangsseile eine funktionelle Dehnungsrate $A_f$ aufweise 1, die größer ist als 4%.

2. Reifen nach Anspruch 1, worin das Umfangsseil (2) von einheitlichen, vermessingten Drähten aus angelassenem Stahl (21) gebildet ist.

3. Reifen nach einem der Ansprüche 1 bis 2, worin das Umfangsseil (2) in mehreren Umdrehungen angeordnet ist, die eine oder mehrere Spiralen bilden.

4. Reifen nach einem der Ansprüche 1 bis 3, worin die genannte Verbindungs-Gummimischung (3) ein synthetisches Elastomer SBR (Styrol-Butadien-Gummi) aufweist, das allein oder im Verschnitt mit Polybutadien (PB) verwendet wird, wobei das genannte SBR eine Glasübergangstemperatur (Tg) hat, die zwischen -70°C und -30°C liegt, und das genannte PB eine Tg aufweist, die zwischen -40°C urd -10°C liegt, das oder die genannten synthetischen Elastomere in einem zusammengerechneten Anteil von mindestens 40% des Elastomer-Gesamtgewichts benutzt wird bzw. werden, der Saldo von natürlichem Gummi gebildet wird und die genannte Mischung ein Maß an Schwefel aufweist, das zwischen 5% und 8% des Gesamtgewichts an Elastomeren und an Kobalt in einer Menge von 0,2% des Gesamtgewichts an Elastomeren aufweist.

5. Reifen nach einem der Ansprüche 1 bis 4, worin die genannten Seile eine Maximalspannung $R_m$ aufweisen, die höher ist als 2000 MPa.

6. Verfahren zur Herstellung eines Seils für einen Reifen, worin man von einem Seil ausgeht, das aus einem kaltgehärteten Stahldraht hergestellt ist, dessen Kohlenstoffgehalt zwischen 0,4% und 1,0% liegt und der mit einer haftenden Verkleidung bedeckt ist, die die Haftung zwischen dem Stahl und dem Gummi begünstigt, man das genannte Seil einer Wärmebehandlung des Erholungsglühens bei einer Temperatur unterzieht, die zwischen 250°C und $Ac_1$ liegt, während einer Dauer, die derart vorgewählt ist, daß man das Maß der funktionellen Dehnung $A_f$ auf einen Wert über 4% verbringt, und man Mittel zur Begrenzung der Verschlechterung der Fähigkeit eines solchen Seils einsetzt, an einer Gummimischung anzuhaften.

7. Verfahren nach Anspruch 6, unter Benutzung eines Stahls, dessen Kohlenstoffgehalt zwischen 0,7% und 0,9% liegt, worin die genannte Warmebehandlung durch den Joule-Effekz und während einer Dauer durchgeführt wird, die kleiner oder gleich 5 Sekunden ist, bei einer Temperatur, die zwischen 400°C und 500°C liegt.

8. Verfahren nach Anspruch 6, unter Benutzung eines Stahls, dessen Kohlenstoffgehalt zwischen 0,7% und 0,9%

liegt, worin die genannte Wärmebehandlung durch statische Konvektion unter Schutzatmosphäre bei einer Temperatur unter 420°C durchgeführt wird und gefolgt ist von einer Abkühlung unter Schutzatmosphäre.

**9.** Verfahren nach Anspruch 6, unter Benutzung eines Stahls, dessen Kohlenstoffgehalt zwischen 0,7% und 0,9% liegt, worin die genannte Wärmebehandlung durch Induktion bei einer Temperatur durchgeführt wird, die zwischen 400°C und 550°C liegt, und während einer Dauer, die kleiner oder gleich eine Sekunde ist.

**10.** Verfahren nach Anspruch 7 oder 9, worin die Wärmebehandlung unter Schutzatmosphäre durchgeführt wird, ebenso wie die nachfolgende Abkühlung.

**11.** Verfahren nach einem der Ansprüche 7 bis 10, gefolgt von einem Schritt der Beizung.

**12.** Verfahren nach einem der Ansprüche 7 bis 11, das solche Mittel einsetzt, daß bei der Überwachung der Fähigkeit eines solchen Seils, an einer sog. "Test-Gummimischung" anzuhaften, vor und nach der genannten Herstellung, die beobachtete Verschlechterung kleiner oder gleich 60% ist.

**13.** Verfahren nach Anspruche 12, daß die genannte, sog. Testmischung ein Grundmaterial bzw. einen Grundkörper aufweist, das 100% NR (Naturgtmmi) aufweist, mit einem Zusatz von verstärkenden Zuschlägen, um eine Shore-Härte A von mehr als 70 zu erreichen, aus einem Maß an Schwefel, das zwischen 5% und 8% liegt, und einem Maß an Cobalt, das zwischen 0,3% und 0,4% liegt (die Prozentsäze sind unter Bezug auf das Gesamtgewicht des Elastomers gegeben).

**14.** Verfahren nach einem der Ansprüche 7 bis 11, das solche Mittel einsetzt, so daß bei der Überwachung der Fähigkeit eines solchen Seils, an einer sog. "Test-Gummimischung" anzuhaften, vor und nach der genannten Herstellung, die beobachtete Verschlechterung kleiner oder gleich einem Schwellenwert ist, wobei die genannte Testmischung gegenüber Veränderungen in der Verkleidung des Seils empfindlicher ist als die genannte Verbindungs-Gummimischung, und daß die Rezeptur der genannten Testmischung so ist, daß der genannte Schwellenwert größer sein soll als die Verschlechterung, die beim genannten Verbindungsgummi beobachtet beobachtet wird.

**15.** Stahlseil "mit großer Dehnung", das für die Verstärkung von Reifen verwendbar ist und aus Drähten aus hartgezogenem Kohlenstoffstahl gebildet ist, die mit einer haftenden Verkleidung abgedeckt sind, die die Haftung zwischen dem Stahl und dem Gummi begünstigt, wobei der Durchmesser der Drähte zwischen 0,05 und 0,8 mm liegt und der Kohlenstoffgehalt des Stahls zwischen 0,4% und 1 % liegt, **dadurch gekennzeichnet, daß** es vor und nach dem Einvulkanisieren in den Reifen der folgenden Zuordnung genügt:

$$Af = Ae + Ap > 4\%,$$

wobei Af seine sog. "funktionelle" Dehnung ist, die Summe seiner elastischen Dehnung Ae und seiner plastischen Dehnung Ap.

**16.** Seil nach Anspruch 15, **dadurch gekennzeichnet, daß** es der Zuordnung: Rm>2000 MPa genügt, wobei Rm seine maximale Zugbeständigkeit ist.

**17.** Seil nach den Ansprüchen 15 oder 16, wobei der Kohlenstoffgehalt des Stahls zwischen 0,7% und 0,9% liegt.

**18.** Seil nach irgendeinem der Ansprüche 15 bis 17, wobei die Verkleidung aus Messing besteht.

**19.** Seil nach irgendeinem der Ansprüche 15 bis 18, wobei seine Drähte ein Maß der Kaltverfestigung $\varepsilon$ von weniger als 3,5 aufweisen.

**20.** Seil nach irgendeinem der Ansprüche 15 bis 19, das aus einem Seil mit Schichten mit dem Aufbau (2+7) oder (3+8) besteht, das aus einer ersten Schicht aus zwei oder drei Drähten besteht, die gemeinsam verdrillt sind, die von einer zweiten Schicht mit 7 oder 8 Drähten umgeben ist, die gemeinsam wendelförmig um diese erste Schicht herumgelegt sind.

**21.** Seil nach irgendeinem der Ansprüche 15 bis 20, das der Zuordnung Rm > 2200 MPa genügt.

**22.** Reifen mit Flanken, die in Wülsten auslaufen, die so konzipiert sind, um auf einer Felge montiert zu werden, wobei der genannte Reifen eine Karkassenbewehrung (1) aufweist, die in den Flanken hindurchläuft und zu den Wülsten gelangt, wobei mindestens einer der genannten Wülste die folgenden Merkmale aufweist:

- verstärkende Karkassenelemente, die vom radial unteren Teil des Wulstes zur Flanke hin verlaufen, und
- mindestens zwei Stapel von verstärkenden Umfangselementen (2), die seitlich an die verstärkenden Karkassenelemente angrenzen,

**dadurch gekennzeichnet, daß** der radial unterste Teil des Stapels, der axial am weitesten außen liegt (5), radial gegenüber dem radial untersten Teil des angrenzenden Stapels (4) nach oben versetzt ist, und daß die genannten Umfangsseile (2) ein Maß der funktionellen Dehnung $A_f$ von mehr als 4% aufweisen.

**23.** Reifen nach Anspruch 22, in dem der radial unterste Teil eines jeden Stapels in Bezug auf den radial untersten Teil des axial nach innen benachbarten Stapels nach oben versetzt ist.

**24.** Reifen mit Flanken, die in Wülsten auslaufen, die wiederum so konzipiert sind, um auf einer Felge montiert zu werden, wobei der genannte Reifen eine Karkassenbewehrung (1) aufweist, die in den Flanken hindurchläuft und zu den Wülste n gelangt, wobei mindestens einer der genannten Wülste die folgenden Merkmale aufweist:

- verstärkende Karkassenelemente, die vom radial unteren Teil des Wulstes zur Flanke hin verlaufen,
- mindestens zwei Stapel von verstärkenden Umfangselementen (2), die seitlich an die verstärkenden Karkassenelemente angrenzen, und
- solche Materialien, daß $e_{1j}$ die Dicke eines jeden Produkts ist, das radial die radial unterste Windung irgendeines Stapels von der radial unteren Stirnfläche des Wulstes trennt, und $e_{2i}$ die Dicke eines jeden Produkts ist, das radial die radial unterste Windung irgendeines Stapels von der axial inneren Stirnfläche des Wulstes trennt, und daß $G_{1j}$ und $G_{2i}$ die jeweiligen Elastizitätsmoduln der in Betracht gezogenen Produkte sind, wobei die genannten Materialien die folgende Regel einhalten:

$$\sum_i e_{2i} * G_{2i} \leq \sum_j e_{1j} * G_{1j}$$

**dadurch gekennzeichnet, daß** die genannten Umfangsseile (2) ein Maß der funktionellen Dehnung $A_f$ von mehr als 4% aufweisen.

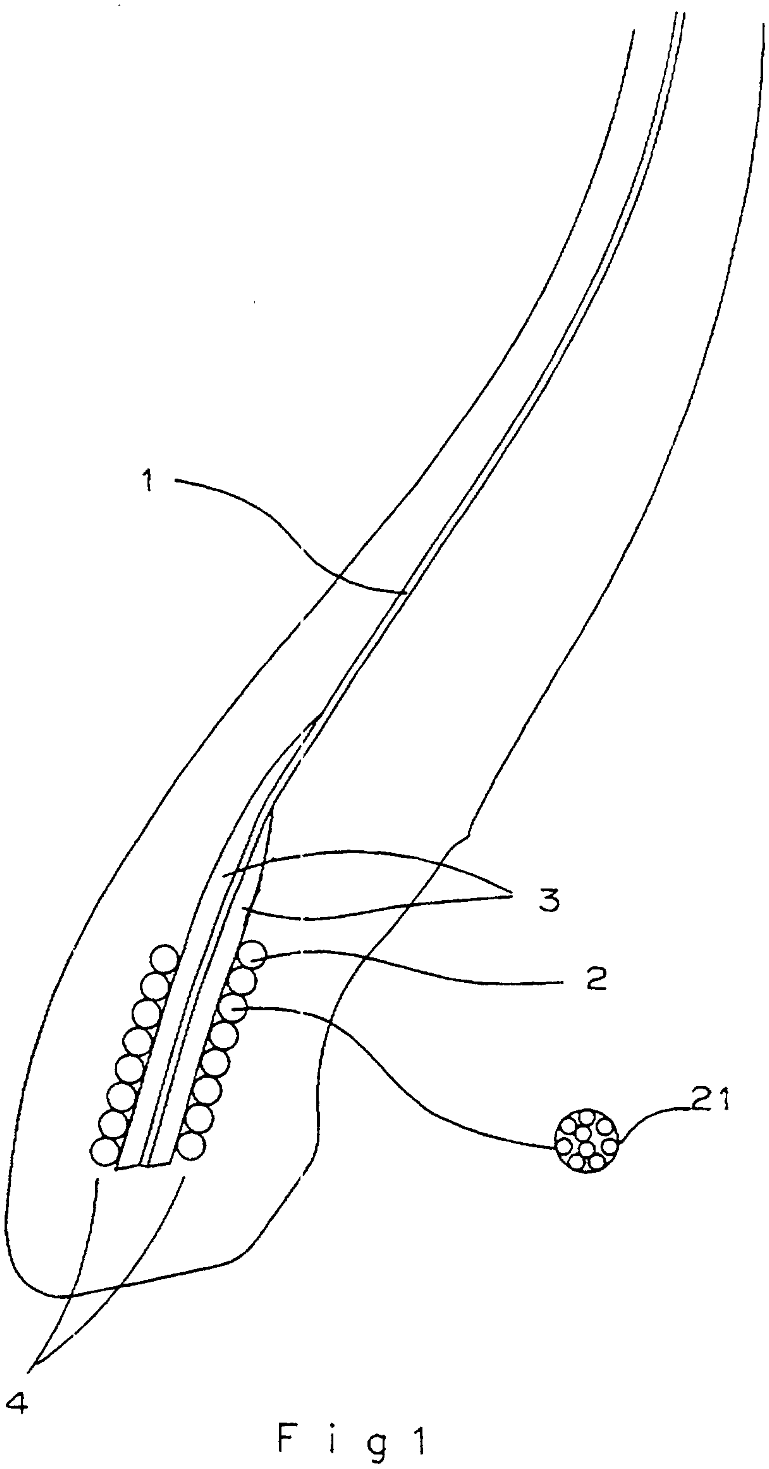


Fig 1

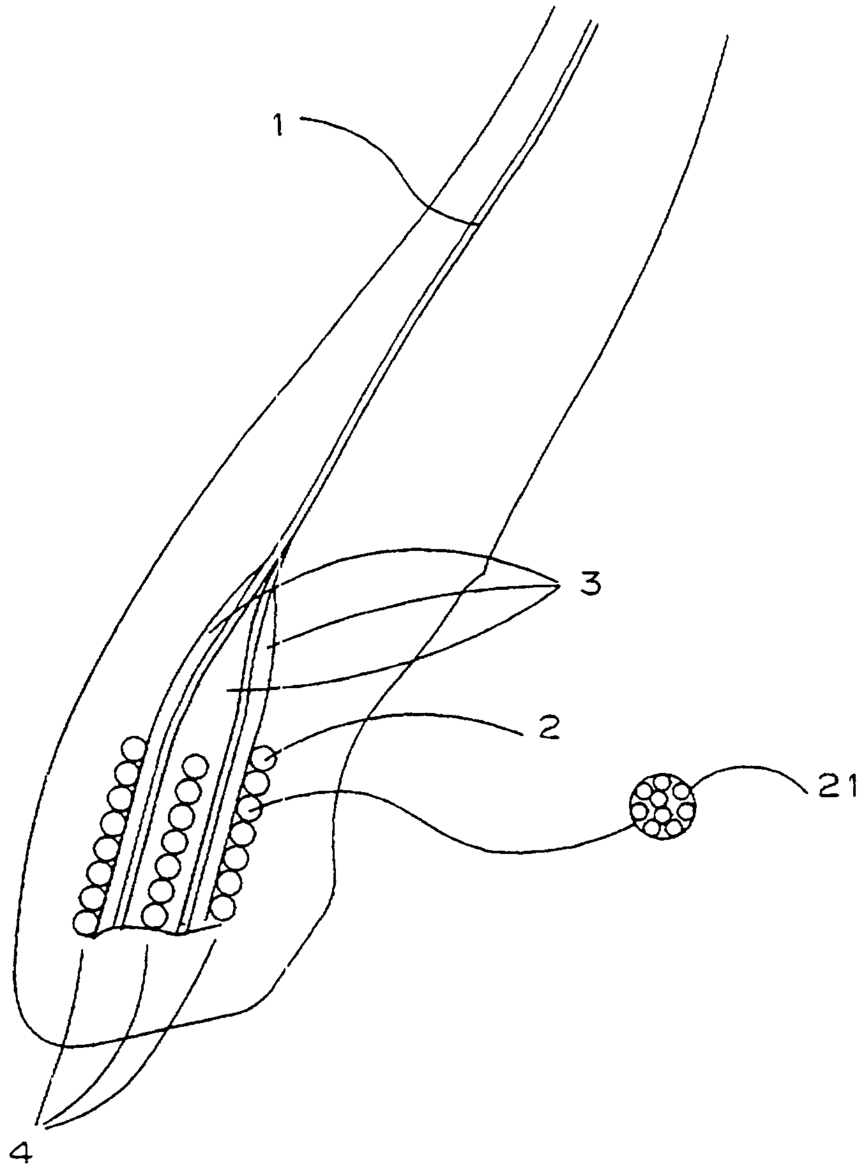


F i g 2

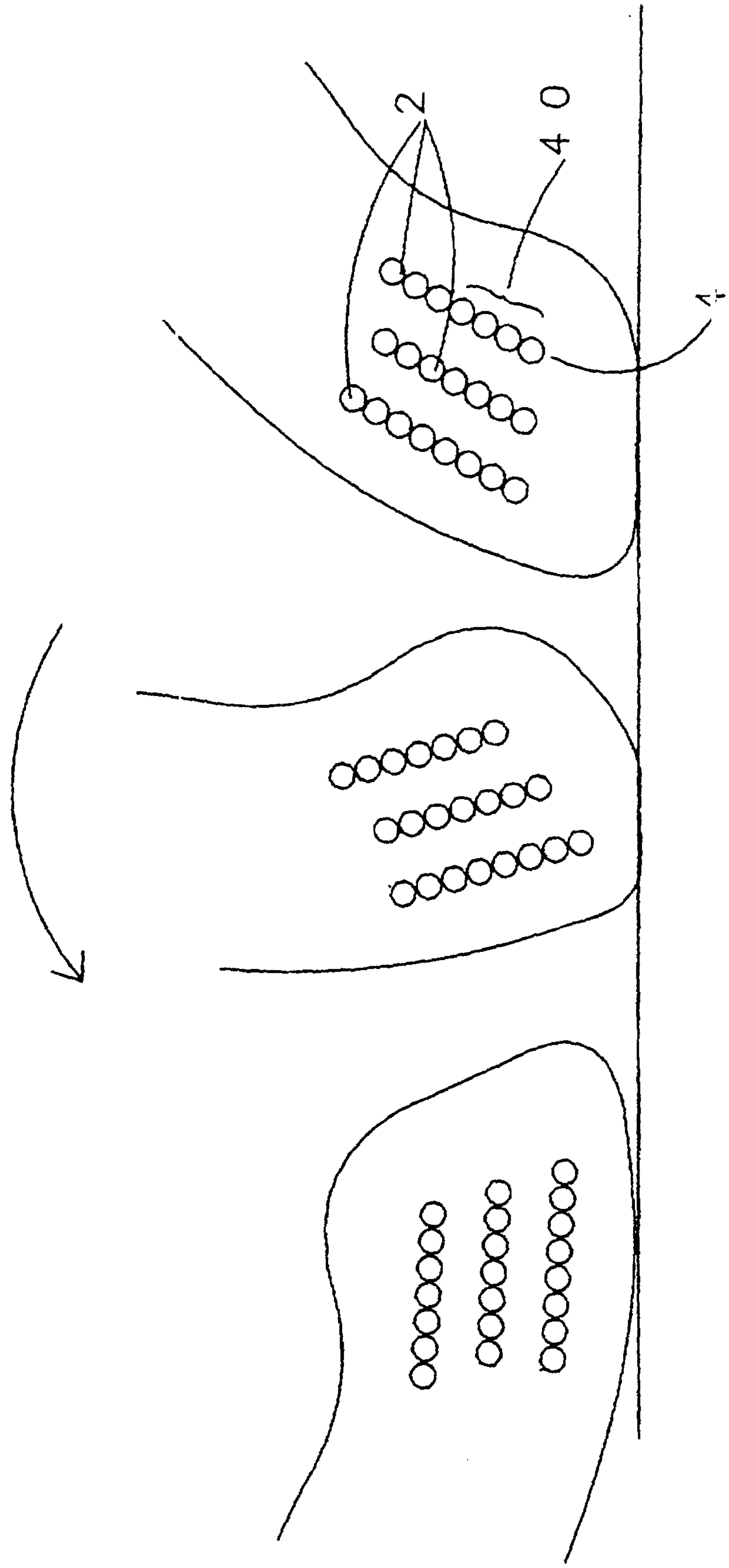


Fig 3

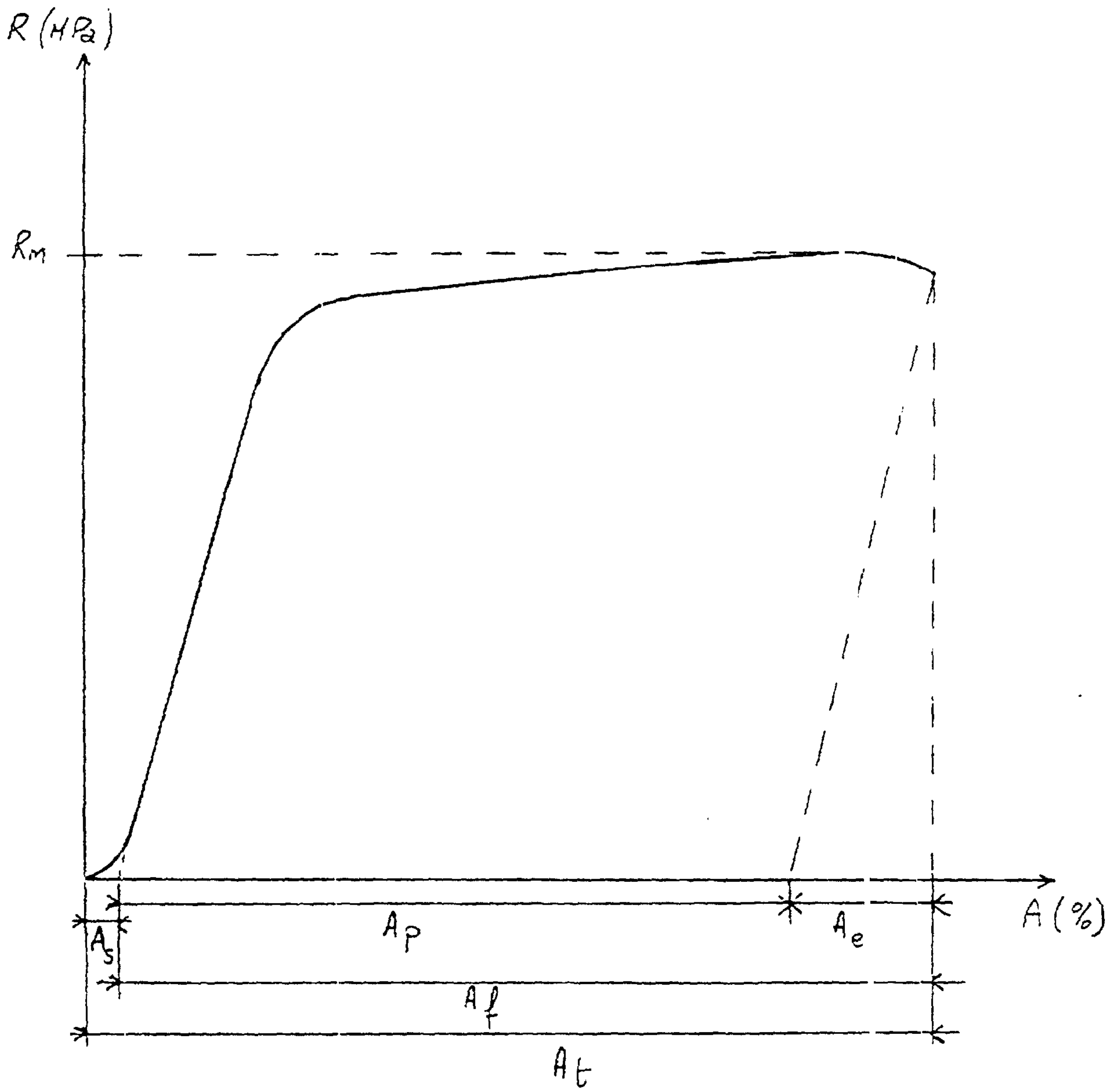


Fig 4

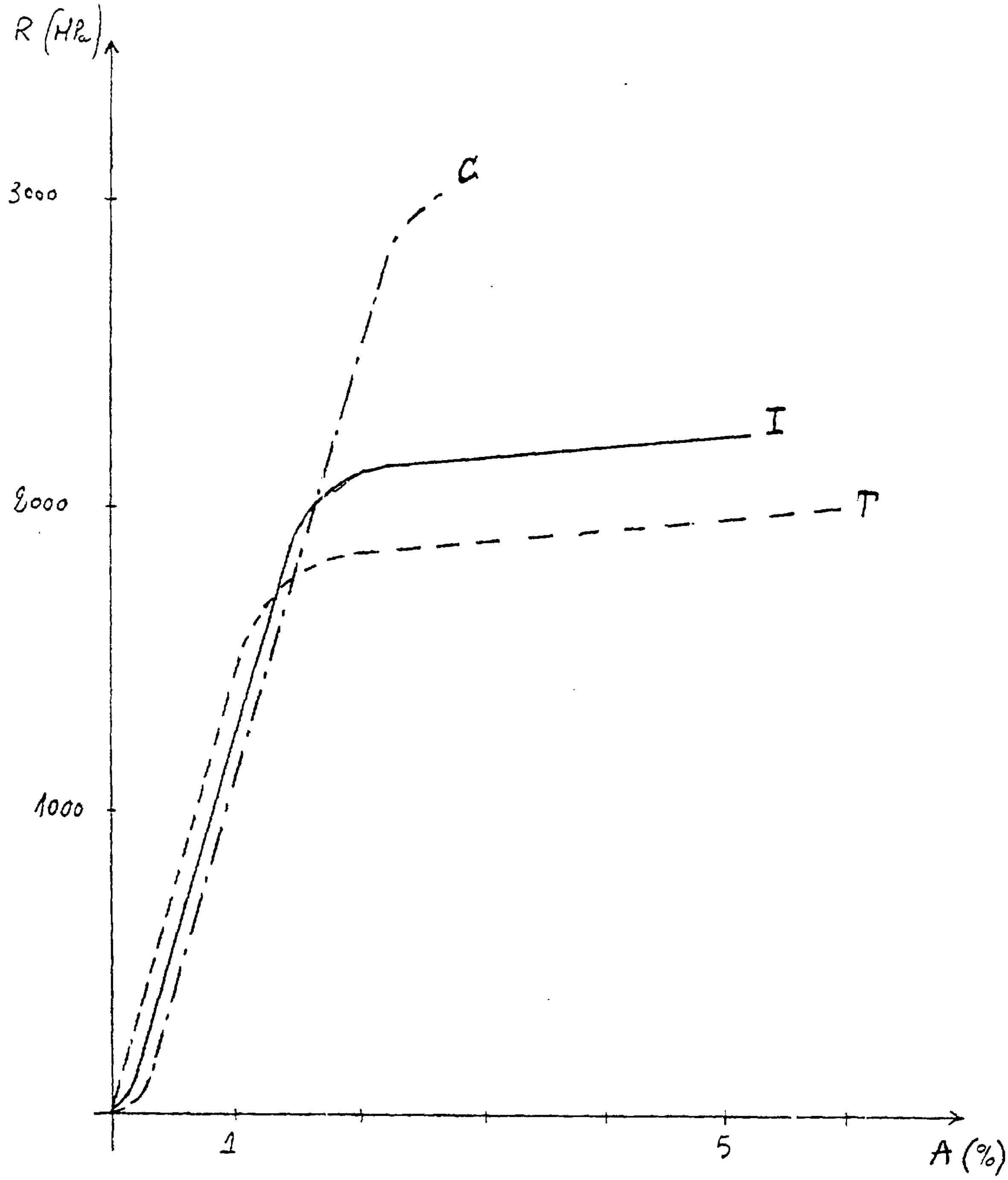


Fig 5

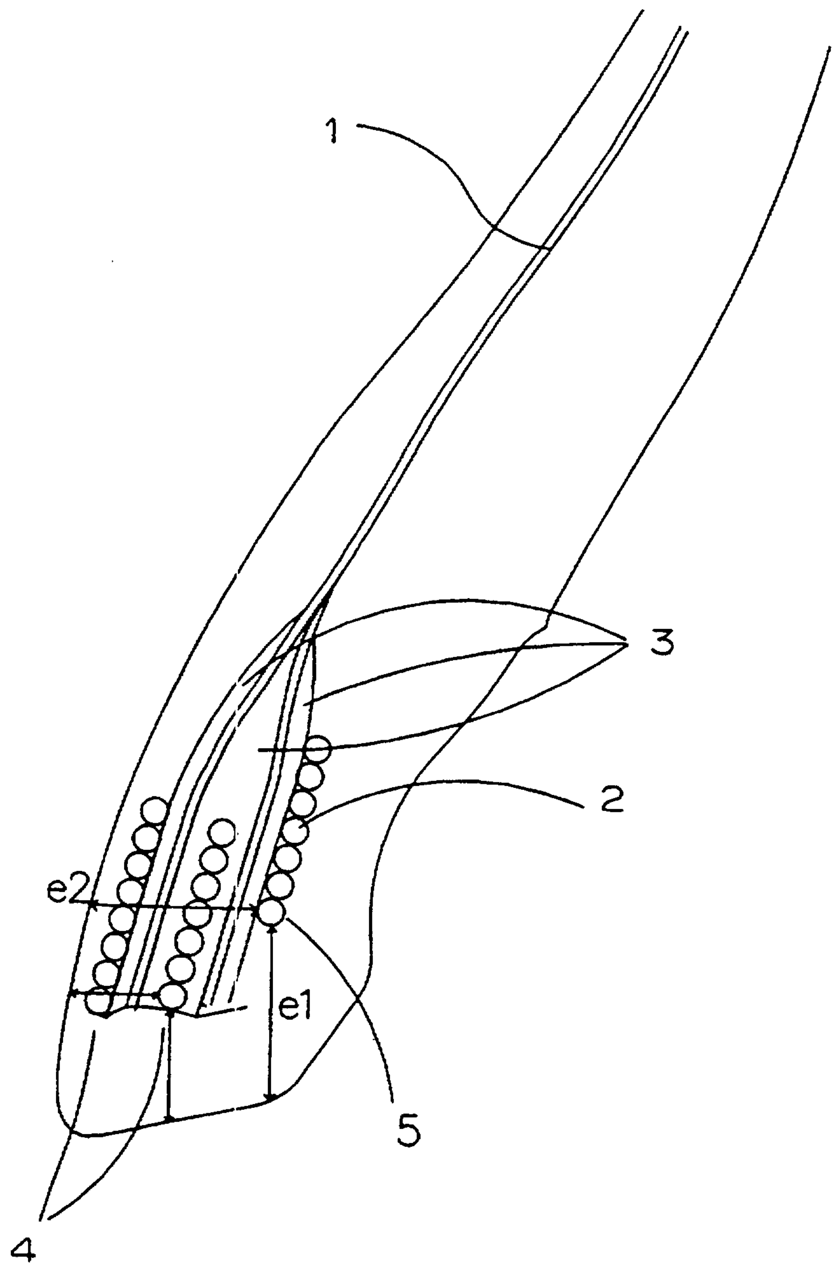


Fig 6

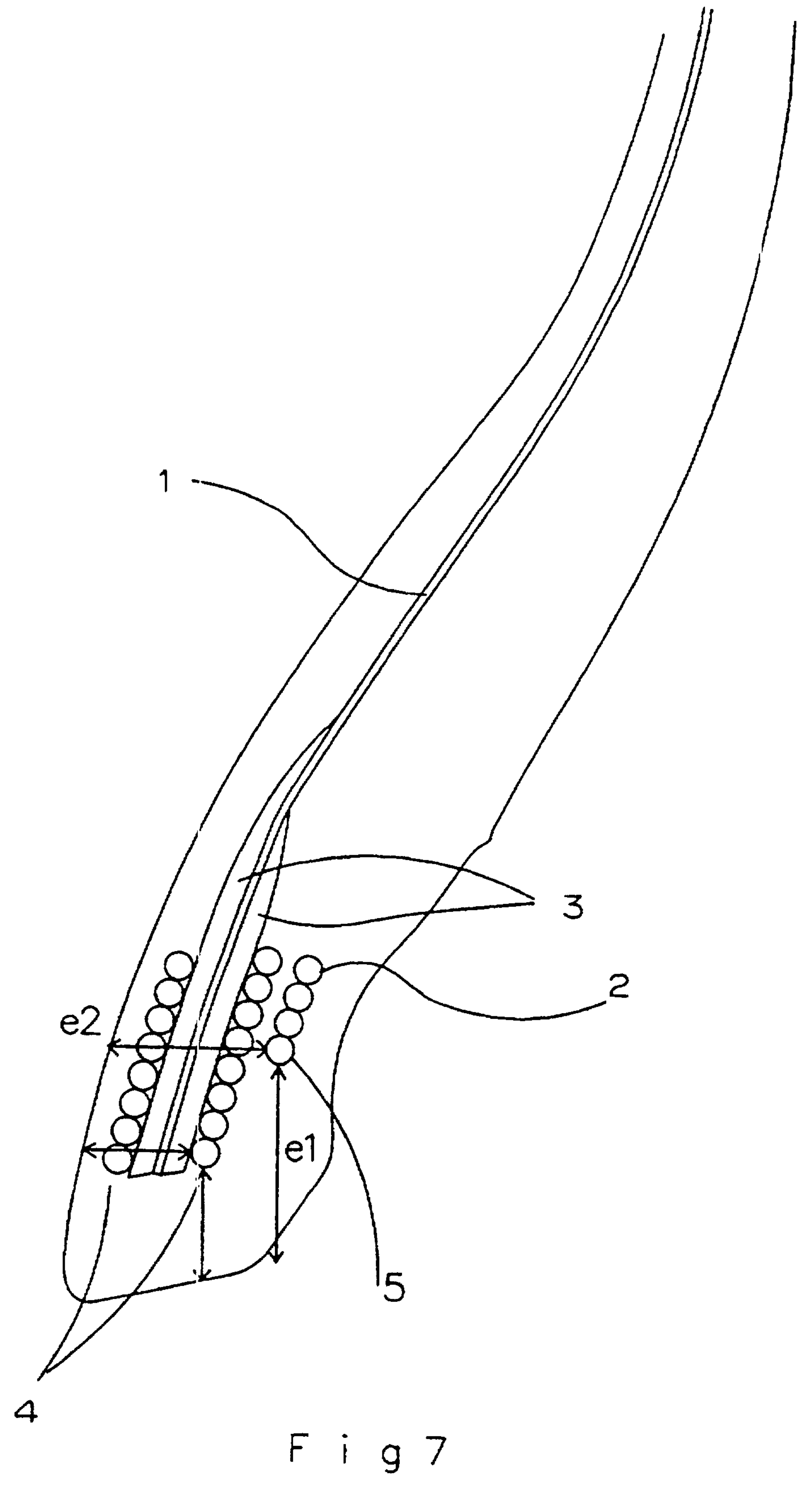


F i g 7

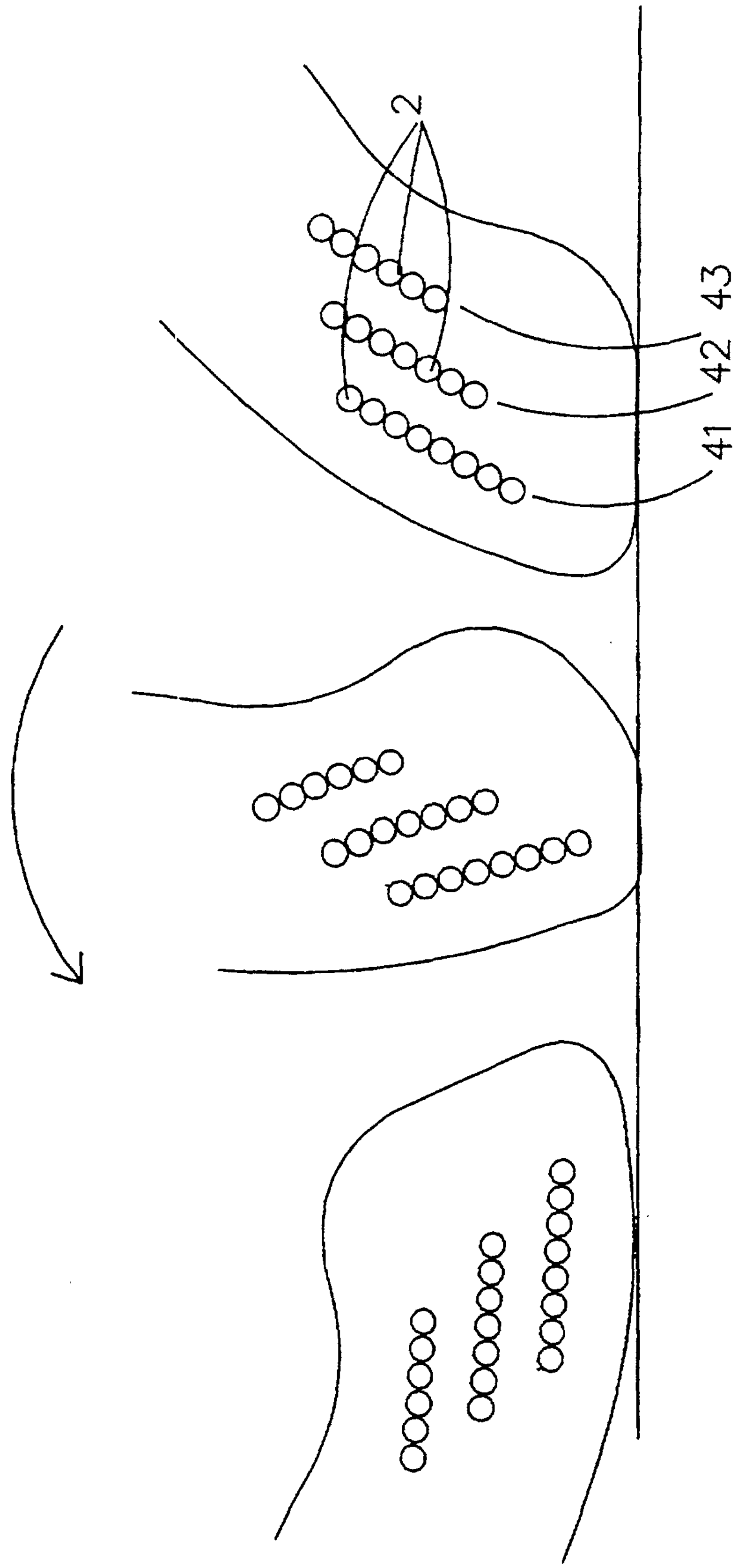


Fig8